# EUROPÄISCHE PATENTSCHRIFT

(11) **EP 3 665 371 B1**
(45) Veröffentlichungstag und Bekanntmachung des Hinweises auf die Patenterteilung: **02.12.2020**
(21) Anmeldenummer: 18755172.6
(22) Anmeldetag: 09.08.2018
(51) Int. Cl.: F01N 3/021, F01N 3/025, F01N 3/10, F01N 3/20, F01N 3/36, F01N 9/00, F01N 13/00

(54) **ABGASNACHBEHANDLUNGSSYSTEM UND VERFAHREN ZUR ABGASNACHBEHANDLUNG EINES VERBRENNUNGSMOTORS**
EXHAUST GAS PURIFICATION SYSTEM AND METHOD FOR PURIFYING EXHAUST GAS OF AN INTERNAL COMBUSTION ENGINE
SYSTÈME ET PROCÉDÉ DE POSTTRAITEMENT DE GAZ D'ÉCHAPPEMENT D'UN MOTEUR À COMBUSTION INTERNE

(30) Priorität: 10.08.2017 DE 102017118215
(43) Veröffentlichungstag der Anmeldung: 17.06.2020
(73) Patentinhaber: Volkswagen AG, 38440 Wolfsburg (DE)
(72) Erfinder: PAUKNER, Stefan, 38442 Wolfsburg (DE); BARON VON CEUMERN-LINDENSTJERNA, Falk-Christian, 38124 Braunschweig (DE)
(74) Vertreter: Gulde & Partner
(86) Internationale Anmeldenummer: PCT/EP2018/071602
(87) Internationale Veröffentlichungsnummer: WO 2019/030315

(56) Entgegenhaltungen:
- DE-A1-102012 021 573
- DE-A1-102013 003 701
- JP-A- H0 533 629
- US-A1- 2011 219 752

## Beschreibung

Die Erfindung betrifft ein Abgasnachbehandlungssystem für einen Verbrennungsmotor sowie ein Verfahren zur Abgasnachbehandlung eines Verbrennungsmotors gemäß den Oberbegriffen der unabhängigen Patentansprüche.

Die kontinuierliche Verschärfung der Abgasgesetzgebung stellt hohe Anforderungen an die Fahrzeughersteller, welche durch entsprechende Maßnahmen zur Reduktion der motorischen Rohemissionen und durch eine entsprechende Abgasnachbehandlung gelöst werden. Mit Einführung der Gesetzgebungsstufe EU6 wird für Ottomotoren ein Grenzwert für eine Partikelanzahl vorgeschrieben, der in vielen Fällen den Einsatz eines Ottopartikelfilters notwendig macht. Solche Rußpartikel entstehen besonders nach einem Kaltstart des Verbrennungsmotors aufgrund einer unvollständigen Verbrennung in Kombination mit einem überstöchiometrischen Verbrennungsluftverhältnis sowie kalter Zylinderwände während des Kaltstarts. Die Kaltstartphase ist somit maßgeblich für die Einhaltung der gesetzlich vorgeschriebenen Partikelgrenzwerte. Im Fahrbetrieb wird ein solcher Ottopartikelfilter weiter mit Ruß beladen. Damit der Abgasgegendruck nicht zu stark ansteigt, muss dieser Ottopartikelfilter kontinuierlich oder periodisch regeneriert werden. Der Anstieg des Abgasgegendrucks kann zu einem Mehrverbrauch des Verbrennungsmotors, Leistungsverlust und einer Beeinträchtigung der Laufruhe bis hin zu Zündaussetzern führen. Um eine thermische Oxidation des im Ottopartikelfilter zurückgehaltenen Rußes mit Sauerstoff durchzuführen, ist ein hinreichend hohes Temperaturniveau in Verbindung mit gleichzeitig vorhandenem Sauerstoff in der Abgasanlage des Ottomotors notwendig. Da moderne Ottomotoren normalerweise ohne Sauerstoffüberschuss mit einem stöchiometrischen Verbrennungsluftverhältnis (λ=1) betrieben werden, sind dazu zusätzliche Maßnahmen erforderlich. Dazu kommen als Maßnahmen beispielsweise eine Temperaturerhöhung durch eine Zündwinkelverstellung, eine zeitweise Magerverstellung des Ottomotors, das Einblasen von Sekundärluft in die Abgasanlage oder eine Kombination dieser Maßnahmen infrage. Bevorzugt wird bislang eine Zündwinkelverstellung in Richtung spät in Kombination mit einer Magerverstellung des Ottomotors angewandt, da dieses Verfahren ohne zusätzliche Bauteile auskommt und in den meisten Betriebspunkten des Ottomotors eine ausreichende Sauerstoffmenge liefern kann.

Aufgrund der guten Wirkungsgrade beim Ottomotor ist eine Regeneration eines Partikelfilters in Unterbodenposition in bestimmten Betriebssituationen unmöglich, sodass die Regeneration eines Partikelfilters in Unterbodenlage spezieller Fahrzyklen bedarf. Eine motornahe Positionierung des Partikelfilters ist günstig, da dadurch höhere Abgastemperaturen am Partikelfilter vorliegen und das Aufheizen auf eine Regenerationstemperatur erleichtert wird. Ein weiteres Problem bei Partikelfiltern mit einer drei-Wege-katalytisch wirksamen Beschichtung, sogenannten Vier-Wege-Katalysatoren, ist die Tatsache, dass die Beschichtung starke Alterungserscheinungen aufweisen kann, sodass für die Konvertierung der gasförmigen Schadstoffe ein zusätzlicher Drei-Wege-Katalysator in motornaher Lage erforderlich sein kann.

Aus der DE 10 2008 036 127 A1 ist ein Verfahren zur Abgasnachbehandlung eines Verbrennungsmotors bekannt, in dessen Abgaskanal ein Partikelfilter und ein Drei-Wege-Katalysator angeordnet sind. Dabei ist der Partikelfilter als erste Komponente der Abgasnachbehandlung stromabwärts eines Auslasses des Verbrennungsmotors angeordnet. Stromabwärts des Partikelfilters ist ein Drei-Wege-Katalysator angeordnet. Dabei wird der Sauerstoffgehalt im Abgas zur Regeneration des Partikelfilters über eine Lambdaregelung des Drei-Wege-Katalysators erhöht.

Die DE 10 2010 046 747 A1 offenbart ein Abgasnachbehandlungssystem für einen Ottomotor sowie ein Verfahren zur Abgasnachbehandlung. Dabei ist stromabwärts eines Drei-Wege-Katalysators ein Partikelfilter angeordnet, wobei zur Regeneration der im Partikelfilter zurückgehaltenen Rußpartikel ein Sekundärluftsystem bereitgestellt werden kann, welches stromabwärts des Drei-Wege-Katalysators und stromaufwärts des Partikelfilters Frischluft in die Abgasanlage einbläst.

Aus der DE 10 2012 204 779 A1 ist ein Abgasnachbehandlungssystem für einen Verbrennungsmotor bekannt, bei dem in einer Abgasanlage ein elektrisch beheizbarer Drei-Wege-Katalysator und stromab des elektrisch beheizbaren Drei-Wege-Katalysators ein weiterer Drei-Wege-Katalysator angeordnet sind. Dabei kann zur Emissionsminderung Sekundärluft in die Abgasanlage eingebracht werden.

Die DE 10 2012 011 603 A1 offenbart einen Verbrennungsmotor mit einer Abgasanlage, wobei in der Abgasanlage ein HC-Adsorber und stromabwärts des HC-Adsorbers ein Drei-Wege-Katalysator angeordnet ist, wobei stromabwärts des HC-Adsorbers und stromaufwärts des Drei-Wege-Katalysators ein Abgasbrenner zur Einleitung von heißen Brennergasen in den Abgaskanal des Verbrennungsmotors vorgesehen ist, um den Drei-Wege-Katalysator aufzuheizen. Dabei können die unverbrannten Kohlenwasserstoffe bei einem Motorstart in dem HC-Adsorber zurückgehalten werden, bis der Drei-Wege-Katalysator oder ein motornaher Startkatalysator ihre Light-Off-Temperatur erreicht haben.

Ferner ist aus der DE 10 2012 021 573 ein Verbrennungsmotor mit einer Abgasanlage bekannt, bei der ein Drei-Wege-Katalysator mittels eines Abgasbrenners aufheizbar ist. Dabei wird ein Vorkatalysator durch den Brenner aufgeheizt, bis eine Konvertierung der schädlichen Abgaskomponenten durch den Vorkatalysator und einen dem Vorkatalysator nachgeschalteten Hauptkatalysator möglich ist.

Die DE 10 2013 003 701 A1 offenbart ein Verfahren zur Steuerung einer Regeneration eines Partikelfilters einer Abgasanlage einer fremdgezündeten Brennkraftmaschine, wobei dem Partikelfilter ein zumindest zur Konvertierung von Stickoxiden ausgebildeter Katalysator nachgeschaltet ist. Dabei ist vorgesehen, dass während einer Regeneration des Partikelfilters ein Luftverhältnis der Brennkraftmaschine auf einen mageren Lambdawert eingestellt wird und stromauf des nachgeschalteten Katalysators dem Abgas der Brennkraftmaschine ein Kohlenwasserstoff zugeführt wird, so dass in dem nachgeschalteten Katalysator eine Konvertierung von Stickoxiden erfolgt.

Aus der US 2011 / 219 752 A1 ist ein Regenerationssystem für einen Partikelfilter bekannt. Dabei wird mit einer Sekundärluftpumpe Frischluft stromaufwärts des Partikelfilters in die Abgasanlage eingebracht. Über ein Kontrollmodul wird die aktuelle Rußbeladung des Partikelfilters ermittelt. Erreicht die Rußbeladung einen definierten Schwellenwert, so wird der Verbrennungsmotor mit einem unterstöchiometrischen Verbrennungsluftverhältnis betrieben und gleichzeitig Sekundärluft in die Abgasanlage eingeblasen, um den Partikelfilter aufzuheizen.

Die JP H05 33629 A offenbart ein Verfahren zum Betreiben eines Katalysators in Unterbodenlage, wobei bei einer niedrigen Katalysatortemperatur ein Abgasbrenner mit Kraftstoff und Frischluft versorgt wird, wobei ein brennbares Gemisch aus Frischluft und Kraftstoff durch eine Zündkerze an dem Abgasbrenner gezündet wird und der Abgasanlage zugeführt wird. Erreicht der Katalysator eine zur Konvertierung von Schadstoffen hinreichende Temperatur, so wird die Kraftstoffversorgung und die Frischluftversorgung für den Abgasbrenner abgeschaltet.

Aufgabe der Erfindung ist es, in allen Fahrzyklen das Erreichen einer Regenerationstemperatur des Partikelfilters sicherzustellen, das Alterungsverhalten des Abgasnachbehandlungssystems zu verbessern und die aus dem Stand der Technik bekannten Nachteile zu überwinden.

Erfindungsgemäß wird diese Aufgabe durch ein Abgasnachbehandlungssystem für einen Verbrennungsmotor mit einer Abgasanlage gelöst, welche mit einem Auslass des Verbrennungsmotors verbunden ist. Dabei umfasst die Abgasanlage einen Abgaskanal, in dem in Strömungsrichtung eines Abgases des Verbrennungsmotors durch den Abgaskanal als erste emissionsmindernde Komponente motornah ein Partikelfilter, stromabwärts des Partikelfilters ebenfalls in einer motornahen Position ein erster Drei-Wege-Katalysator und stromabwärts des ersten Drei-Wege-Katalysators ein weiterer Drei-Wege-Katalysator angeordnet sind. Stromabwärts des Partikelfilters ist ein Brenner vorgesehen, mit welchem heißes Abgas zur Erwärmung zumindest eines der Drei-Wege-Katalysatoren in die Abgasanlage vorgesehen ist. Unter einer motornahen Anordnung des Partikelfilters und des ersten Drei-Wege-Katalysators ist in diesem Zusammenhang eine Anordnung der Abgasnachbehandlungskomponenten mit einer Abgaslauflänge von weniger als 80 cm, insbesondere von weniger als 50 cm, besonders bevorzugt von weniger als 35 cm ab einem Auslass des Verbrennungsmotors zu verstehen. Dadurch sind eine beschleunigte Aufheizung des Partikelfilters und des ersten Drei-Wege-Katalysators, insbesondere nach einem Kaltstart des Verbrennungsmotors, möglich. Durch die motornahe Position des Partikelfilters geht weniger Abwärme über die Wände des Abgaskanals verloren, sodass es im Vergleich zu einem Partikelfilter in Unterbodenposition des Verbrennungsmotors leichter ist, am Partikelfilter eine zur Regeneration des Partikelfilters notwendige Oxidationstemperatur von im Partikelfilter zurückgehaltenen Rußpartikeln zu erreichen. Durch den Abgasbrenner kann eine hohe Energiemenge in die Abgasanlage eingebracht werden, wodurch zumindest einer der Drei-Wege-Katalysatoren zeitnah nach einem Kaltstart seine Light-Off-Temperatur erreicht und somit eine effiziente Konvertierung von Schadstoffen ermöglicht. Somit ist eine wesentlich schnellere Erwärmung des Drei-Wege-Katalysators als durch ein elektrisches Heizelement möglich, sodass der Drei-Wege-Katalysator schneller seine Light-Off-Temperatur erreicht.

Durch die in den abhängigen Ansprüchen aufgeführten Merkmale sind vorteilhafte Verbesserungen und Weiterbildungen des erfindungsgemäßen Abgasnachbehandlungssystems für einen Verbrennungsmotor möglich.

In bevorzugter Ausgestaltung der Erfindung ist vorgesehen, dass der Partikelfilter frei von einer Beschichtung, insbesondere frei von einer drei-Wege-katalytisch wirksamen Beschichtung oder einer Beschichtung zur selektiven katalytischen Reduktion von Stickoxiden, und/oder frei von einem Sauerstoffspeicher, insbesondere frei von einem Washcoat mit Sauerstoffspeicherfähigkeit, ausgeführt ist. Dadurch kann eine alterungsbedingte Veränderung der Eigenschaften des Partikelfilters verhindert werden, sodass der Partikelfilter über seine Lebenszeit ein im Wesentlichen gleiches Verhalten aufweist. Zudem kann auf diese Weise die Funktion des Partikelfilters und des beheizbaren Drei-Wege-Katalysators durch ein gemeinsames Lambdasondenpaar überwacht werden, wobei die erste Lambdasonde stromaufwärts des Partikelfilters und die zweite Lambdasonde stromabwärts des elektrisch beheizbaren Drei-Wege-Katalysators angeordnet ist. Da der Partikelfilter als erste Abgasnachbehandlungskomponente nach dem Auslass des Verbrennungsmotors angeordnet ist, wird der Partikelfilter insbesondere bei einem Volllastbetrieb des Verbrennungsmotors mit hohen Abgastemperaturen beaufschlagt, welche ansonsten zu einer verstärkten thermischen Alterung einer katalytischen Beschichtung führen. Zudem kann durch den Verzicht auf eine Beschichtung der Partikelfilter mit weniger Zellen ausgeführt werden, wodurch die thermische Masse des Partikelfilters reduziert wird und ein Aufheizen des Partikelfilters begünstigt wird. Zudem wird zusätzlich der Abgasgegendruck reduziert, wodurch die Strömungsverluste in der Abgasanlage reduziert werden können und somit der Wirkungsgrad des Verbrennungsmotors gesteigert werden kann. Dies kann bei ansonsten unveränderten Rahmenbedingungen zu mehr Leistung oder einem verringerten Verbrauch genutzt werden. Zusätzlich können auf diese Art und Weise die thermische Masse des Partikelfilters reduziert und der Abgasgegendruck verringert und die Aschespeicherkapazität gegenüber einem beschichteten Partikelfilter erhöht werden. Durch die geringere thermische Masse und die motornahe Position des Partikelfilters wird zudem das Erreichen der Regenerationstemperatur des Partikelfilters erleichtert.

Gemäß einer bevorzugten und vorteilhaften Ausführungsform der Erfindung ist vorgesehen, dass der Abgasbrenner mit einem variablen Verbrennungsluftverhältnis betreibbar ist. Dadurch kann der Abgasbrenner Lambdaschwankungen, insbesondere einen unterstöchiometrischen Lambdabetrieb in der Kaltstartphase des Verbrennungsmotors ausgleichen und somit für ein stöchiometrisches Abgas stromabwärts der Einleitstelle für die heißen Brennergase des Abgasbrenners sorgen.

Besonders bevorzugt ist dabei, wenn stromabwärts einer Einleitstelle des Abgasbrenners ein stöchiometrisches Abgas eingeregelt wird. Durch ein stöchiometrisches Abgas ist eine besonders effiziente Abgasnachbehandlung an den stromabwärts der Einleitstelle liegenden Drei-Wege-Katalysatoren möglich.

Gemäß einer bevorzugten und vorteilhaften Ausführungsform der Erfindung ist vorgesehen, dass der Verbrennungsmotor ein Sekundärluftsystem zur Einbringung von Sekundärluft in den Abgaskanal aufweist, wobei eine Einleitstelle des Sekundärluftsystems an dem Auslass des Verbrennungsmotors oder stromabwärts des Auslasses und stromaufwärts des Partikelfilters angeordnet ist. Dabei wird Sekundärluft in die heißen Auslasskanäle des Verbrennungsmotors eingeblasen, wobei die unverbrannten Abgaskomponenten mit der Sekundärluft noch in dem Auslasskanal exotherm reagieren und somit für ein Aufheizen des Abgases sorgen. Somit kann die Zeit, in welcher der erste Drei-Wege-Katalysator seine Light-Off-Temperatur erreicht hat, weiter verkürzt werden. Ferner kann das Sekundärluftsystem genutzt werden, um eine Regeneration des Partikelfilters durchzuführen und den für die Regeneration notwendigen Sauerstoff in den Abgaskanal stromaufwärts des Partikelfilters einzubringen. Dadurch kann der Betriebszustand des Verbrennungsmotors bei einer Regeneration des Partikelfilters entsprechend angepasst werden, sodass der Verbrennungsmotor nicht mit einem überstöchiometrischen Verbrennungsluftverhältnis betrieben werden muss, um eine Regeneration des Partikelfilters zu ermöglichen.

In einer vorteilhaften Verbesserung der Erfindung ist vorgesehen, dass eine Einleitstelle der Abgase des Abgasbrenners stromabwärts des Partikelfilters und stromaufwärts des ersten Drei-Wege-Katalysators ausgebildet ist. Durch eine Einleitstelle stromabwärts des Partikelfilters und stromaufwärts des ersten, motornahen Drei-Wege-Katalysators ist ein besonders schnelles Aufheizen des Drei-Wege-Katalysators auf seine Light-Off-Temperatur möglich, da keine weiteren Bauteile mit aufgeheizt werden müssen und insbesondere keine Durchwärmung des motornahen Partikelfilters zum Erreichen der Light-Off-Temperatur des ersten Drei-Wege-Katalysators notwendig ist.

Gemäß einer bevorzugten Ausführungsform der Erfindung ist vorgesehen, dass stromaufwärts des Partikelfilters eine erste Lambdasonde und stromabwärts des ersten (motornahen) Drei-Wege-Katalysators und stromaufwärts des zweiten Drei-Wege-Katalysators eine zweite Lambdasonde im Abgaskanal angeordnet sind. Dadurch kann mit einem Lambdasondenpaar sowohl die Lambdaregelung des Verbrennungsmotors als auch die On-Board-Diagnose des beheizbaren Drei-Wege-Katalysators erfolgen, da der unbeschichtete Partikelfilter die Lambdaregelung nicht beeinflusst. Dabei ist die erste Lambdasonde vorzugsweise als Breitbandlambdasonde ausgeführt, um eine quantitative Aussage über den Sauerstoffgehalt im Abgas zu ermöglichen. Die zweite Lambdasonde kann als Sprung-Lambdasonde ausgeführt werden, um die Kosten zu reduzieren und somit eine qualitative Aussage über einen Sauerstoffüberschuss im Abgas zu liefern. Alternativ kann die zweite Lambdasonde auch als Breitbandsonde ausgeführt werden, um eine quantitative Regelung des Verbrennungsluftverhältnisses des Abgasbrenners zu ermöglichen.

Gemäß einer bevorzugten Ausführungsform der Erfindung ist vorgesehen, dass stromaufwärts des Partikelfilters ein erster Drucksensor und stromabwärts des Partikelfilters und vorzugsweise stromaufwärts des ersten Drei-Wege-Katalysators ein zweiter Drucksensor angeordnet sind. Dadurch kann mit einem Drucksensorpaar eine Differenzdruckmessung über den Partikelfilter ausgeführt werden, über welche ein Beladungszustand des Partikelfilters ermittelt werden kann. Somit kann auf Basis der Druckdifferenz eine Regeneration des Partikelfilters eingeleitet werden. Zudem kann eine On-Board-Diagnose des Partikelfilters durchgeführt werden.

Erfindungsgemäß wird ein Verfahren zur Abgasnachbehandlung eines Verbrennungsmotors mit einem erfindungsgemäßen Abgasnachbehandlungssystem vorgeschlagen, umfassend folgende Schritte:
- Aufheizen zumindest eines der Drei-Wege-Katalysatoren auf eine Light-Off-Temperatur durch Einleiten von heißem Abgas des Abgasbrenners in die Abgasanlage,
- Beheizen des Partikelfilters, des ersten Drei-Wege-Katalysators und des zweiten Drei-Wege-Katalysators mit dem Abgasstrom des Verbrennungsmotors ab dem Start des Verbrennungsmotors.

Durch ein erfindungsgemäßes Verfahren kann zumindest eine schadstoffmindernde Abgasnachbehandlungskomponente, insbesondere der erste Drei-Wege-Katalysator, zeitnah nach einem Kaltstart des Verbrennungsmotors auf eine Light-Off-Temperatur aufgeheizt werden, wodurch eine effiziente Konvertierung der schädlichen gasförmigen Abgaskomponenten möglich ist. Zudem kann die Alterungsbeständigkeit der katalytischen Beschichtung erhöht werden, da der erste Drei-Wege-Katalysator in einem Volllastbetrieb des Verbrennungsmotors nicht so heiß wird wie der in erster Position nach dem Auslass angeordnete Partikelfilter. Ferner wird die Regeneration des Partikelfilters durch die motornahe Anordnung erleichtert und die Nachteile einer katalytischen Beschichtung auf dem Partikelfilter vermieden.

In einer bevorzugten Ausführungsform des Verfahrens zur Abgasnachbehandlung ist vorgesehen, dass in einer Heizphase eines der Drei-Wege-Katalysatoren oder des Partikelfilters Sekundärluft in den auslassseitigen Zylinderkopf oder in den Abgaskanal stromabwärts des Auslasses und stromaufwärts des Partikelfilters eingebracht wird, um das Aufheizen der Katalysatoren oder des Partikelfilters durch eine exotherme Umsetzung von unverbrannten Kraftstoffkomponenten zu unterstützen. Durch das Einblasen von Sekundärluft kann der Wärmeeintrag durch die heißen Abgase des Abgasbrenners unterstützt werden, da durch die exotherme Reaktion im Abgaskanal zusätzliche Wärme entsteht, welche zum Aufheizen der Drei-Wege-Katalysatoren und des Partikelfilters genutzt werden kann.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Gleiche Bauteile oder Bauteile mit gleicher Funktion sind dabei in den unterschiedlichen Figuren mit gleichen Bezugszeichen gekennzeichnet. Es zeigen:
- Figur 1: eine erstes Ausführungsbeispiel eines Verbrennungsmotors mit einem erfindungsgemäßen Abgasnachbehandlungssystem;
- Figur 2: ein weiteres Ausführungsbeispiel eines Verbrennungsmotors mit einem erfindungsgemäßen Abgasnachbehandlungssystem, wobei das Abgasnachbehandlungssystem zusätzlich ein Sekundärluftsystem zur Einbringung von Frischluft in die Abgasanlage aufweist;
- Figur 3: ein weiteres Ausführungsbeispiel eines Verbrennungsmotors mit einem erfindungsgemäßen Abgasnachbehandlungssystem, wobei der Abgasbrenner stromabwärts des ersten Drei-Wege-Katalysators und stromaufwärts des zweiten Drei-Wege-Katalysators angeordnet ist; und
- Figur 4: ein Diagramm, in welchem der Temperaturverlauf in der Abgasanlage bei der Durchführung eines erfindungsgemäßen Verfahrens zur Abgasnachbehandlung dargestellt ist.

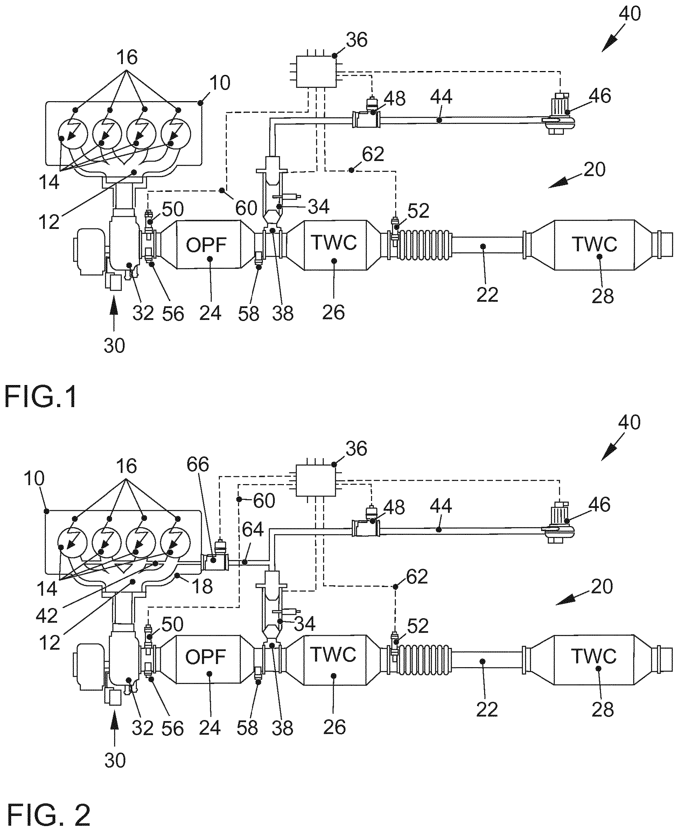

Figur 1 zeigt eine schematische Darstellung eines Verbrennungsmotors 10, dessen Auslass 12 mit einer Abgasanlage 20 verbunden ist. Der Verbrennungsmotor 10 ist als Ottomotor ausgeführt, welcher mittels Zündkerzen 16 fremdgezündet wird und weist mehrere Brennräume 14 auf. Der Verbrennungsmotor 10 ist vorzugsweise als mittels eines Abgasturboladers 30 aufgeladener Verbrennungsmotor 10 ausgeführt, wobei eine Turbine 32 des Abgasturboladers 30 stromabwärts des Auslasses 12 und stromaufwärts der ersten emissionsmindernden Abgasnachbehandlungskomponente, insbesondere stromaufwärts eines Partikelfilters 24, angeordnet ist. Die Abgasanlage 20 umfasst einen Abgaskanal 22, in dem in Strömungsrichtung eines Abgases durch den Abgaskanal 22 ein Partikelfilter 24, stromabwärts des Partikelfilters 24 ein erster Drei-Wege-Katalysator 26, und weiter stromabwärts ein zweiter Drei-Wege-Katalysator 28 angeordnet sind. Der Partikelfilter 24 und der erste Drei-Wege-Katalysator 26 sind dabei vorzugsweise jeweils motornah, das heißt mit einem Abstand von weniger als 80 cm Abgaslauflänge, insbesondere von weniger als 50 cm Abgaslauflänge, ab dem Auslass 12 des Verbrennungsmotors 10 angeordnet. Der zweite Drei-Wege-Katalysator 28 ist vorzugsweise in Unterbodenlage eines Kraftfahrzeuges und somit in einer motorfernen Position, das heißt mit einem Abstand von mehr 100 cm Abgaslauflänge ab dem Auslass 12 des Verbrennungsmotors, angeordnet. Stromabwärts des Partikelfilters 24 und stromaufwärts des ersten Drei-Wege-Katalysators 26 ist eine Einleitstelle 38 für heiße Abgase eines Abgasbrenners 34 vorgesehen, über welche der stromabwärts der Einleitstelle 38 angeordnete erste Drei-Wege-Katalysator 26 unabhängig von der Betriebssituation des Verbrennungsmotors 10 aufgeheizt werden kann.

In der Abgasanlage 20 können zusätzlich weitere Katalysatoren, insbesondere ein weiterer Drei-Wege-Katalysator, ein NOx-Speicherkatalysator oder ein Katalysator zur selektiven katalytischen Reduktion von Stickoxiden angeordnet sein. Stromaufwärts des Partikelfilters 24 ist im Abgaskanal 22 eine erste Lambdasonde 50 angeordnet, mit welcher der Sauerstoffgehalt λ₁ des Abgases stromabwärts des Auslasses 12 und stromaufwärts der ersten Abgasnachbehandlungskomponente, also des Partikelfilters 24, ermittelt werden kann. Stromabwärts des ersten Drei-Wege-Katalysators 26 und stromaufwärts des zweiten Drei-Wege-Katalysators 28 ist im Abgaskanal 22 eine zweite Lambdasonde 52 angeordnet, mit welcher der Sauerstoffgehalt λ₂ im Abgaskanal 28 stromabwärts des ersten Drei-Wege-Katalysators 26 und stromaufwärts des zweiten Drei-Wege-Katalysators 28 ermittelt werden kann. Die erste Lambdasonde 50 ist vorzugsweise als Breitband-Lambdasonde aufgeführt und über eine erste Signalleitung 60 mit einem Steuergerät 36 des Verbrennungsmotors 10 verbunden. Die zweite Lambdasonde 52 ist vorzugsweise als Sprungsonde ausgeführt und über eine zweite Signalleitung 62 mit dem Steuergerät 36 verbunden. Die erste Lambdasonde 50 und die zweite Lambdasonde 52 bilden dabei eine Sensoranordnung aus, mit welcher das Verbrennungsluftverhältnis λ des Verbrennungsmotors 10 geregelt werden kann. Zusätzlich kann über die Sensoranordnung eine On-Board-Diagnose des ersten Drei-Wege-Katalysators 26 erfolgen.

Der Abgasbrenner 34 ist über ein Sekundärluftsystem 40 mit Frischluft und über das Kraftstoffsystem des Verbrennungsmotors 10 oder eine separate Kraftstoffpumpe mit einem Kraftstoff versorgbar. Dabei umfasst das Sekundärluftsystem 40 eine Sekundärluftpumpe 46, welche über eine Sekundärluftleitung 44 mit dem Abgasbrenner 34 verbunden ist. In der Sekundärluftleitung 44 ist ein Sekundärluftventil 48 angeordnet, mit welchem die Luftzufuhr zu dem Abgasbrenner 34 hergestellt und unterbunden werden kann. Ferner sind stromaufwärts und stromabwärts des Partikelfilters 24 Drucksensoren 56, 58 vorgesehen, mit welchen eine Differenzdruckmessung über den Partikelfilter 24 zur Ermittlung des Beladungszustands des Partikelfilters 24 durchgeführt werden kann. Zudem kann über die Drucksensoren 56, 58 eine On-Board-Diagnose des Partikelfilters 24 erfolgen.

In Figur 2 ist ein weiteres Ausführungsbeispiel eines Verbrennungsmotors mit einem Abgasnachbehandlungssystem dargestellt. Bei im Wesentlichen gleichem Aufbau wie zu Figur 1 ausgeführt, weist das Sekundärluftsystem 40 eine zusätzliche Sekundärluftleitung 64 auf, welche die Sekundärluftpumpe 46 mit einer Einleitstelle 42 an einen auslassseitigen Zylinderkopf 18 des Verbrennungsmotors 10 verbindet. In der zusätzlichen Sekundärluftleitung 64 ist ein weiteres Sekundärluftventil 66 angeordnet, um die Sekundärluft in ein möglichst heißes Abgas einbringen zu können und somit exotherme Reaktionen mit unverbrannten Kraftstoffkomponenten zu begünstigen. Alternativ kann die Einleitstelle 42 auch an Stellen stromaufwärts des Partikelfilters 24 ausgebildet sein, sodass der Partikelfilter 24 und die stromabwärts des Partikelfilters 24 angeordneten Drei-Wege-Katalysatoren 26, 28 mit Sekundärluft versorgt werden können.

Im Betrieb des Verbrennungsmotors 10 wird das Abgas des Verbrennungsmotors 10 durch den Partikelfilter 24, den ersten, motornahen Drei-Wege-Katalysator 26 sowie den zweiten Drei-Wege-Katalysator 28 in Unterbodenposition geleitet, wobei die im Abgas enthaltenen Rußpartikel aus dem Abgasstrom herausgefiltert werden und die schädlichen Abgaskomponenten in unschädliche Abgaskomponenten konvertiert werden. Durch die motornahe Anordnung des Partikelfilters 24 und des ersten Drei-Wege-Katalysators 26 ist nach einem Kaltstart des Verbrennungsmotors 10 eine besonders schnelle Aufheizung auf eine Light-Off-Temperatur möglich, um möglichst schnell nach dem Kaltstart eine effiziente Konvertierung der gasförmigen Schadstoffe zu ermöglichen. Dabei ist der Partikelfilter 24 vorzugsweise unbeschichtet, insbesondere ohne eine Beschichtung mit einer Sauerstoffspeicherfähigkeit, ausgeführt. Dadurch ist eine Diagnose des ersten Drei-Wege-Katalysators 26 über die Lambdasonden 50, 52 möglich. Durch die Anordnung des Partikelfilters 24 als erste Komponente der Abgasnachbehandlung wird bei einem Volllastbetrieb des Verbrennungsmotors 10 der erste Drei-Wege-Katalysator 26 thermisch nicht so stark belastet, sodass die Alterung der katalytischen Beschichtung des ersten Drei-Wege-Katalysators 26 reduziert werden kann.

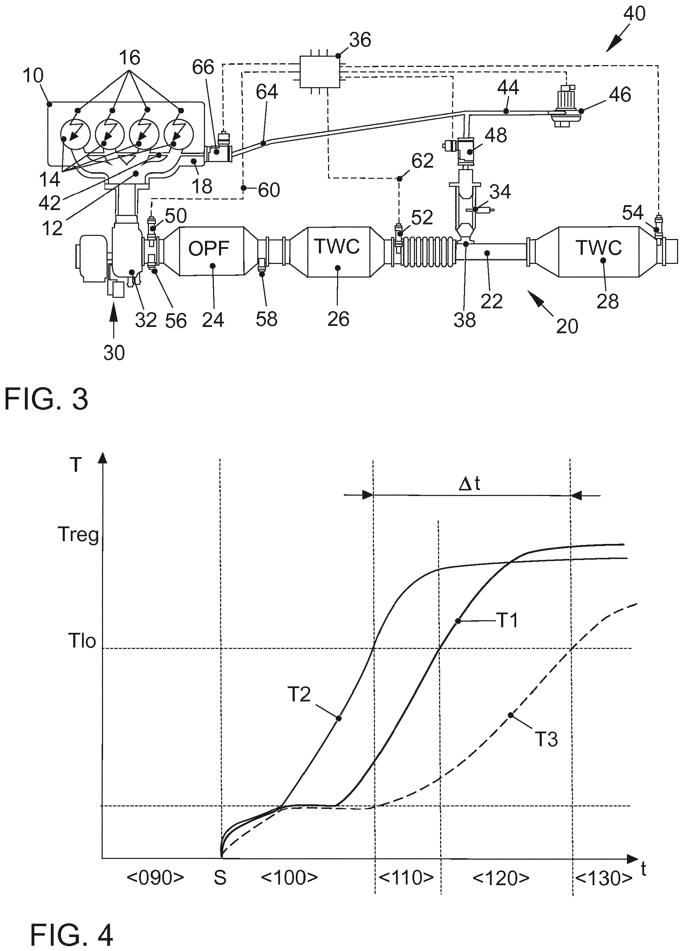

In Figur 3 ist ein weiteres Ausführungsbeispiel eines erfindungsgemäßen Verbrennungsmotors 10 dargestellt. Bei im Wesentlichen gleichem Aufbau wie zu Figur2 ausgeführt, befindet sich die Einleitstelle 38 für die heißen Abgase des Abgasbrenners 34 in diesem Ausführungsbeispiel stromabwärts des ersten Drei-Wege-Katalysators 26 und stromaufwärts des zweiten Drei-Wege-Katalysators 28. Zusätzlich ist stromabwärts des zweiten Drei-Wege-Katalysators 28 eine dritte Lambdasonde 54 zur Regelung des Verbrennungsluftverhältnisses λ_{B} des Abgasbrenners 34 vorgesehen. Bei diesem Ausführungsbeispiel wird der zweite Drei-Wege-Katalysator 28 durch den Abgasbrenner 34 beheizt und erreicht somit kurz nach einem Kaltstart des Verbrennungsmotors 10 seine Light-Off-Temperatur T_{LO}. Dieses Ausführungsbeispiel ist insbesondere bei eng bepackten Motorraumkonfigurationen sinnvoll, bei denen eine motornahe Anordnung des Abgasbrenners 34 aus Bauraumgründen nicht oder nur mit erheblichem Zusatzaufwand möglich ist.

In Figur 4 ist der Temperaturverlauf an mehreren Stellen der Abgasanlage 20 beim Ablauf eines erfindungsgemäßen Verfahrens zur Abgasnachbehandlung dargestellt. Dabei ist in einer ersten Kurve I die Temperatur T1 unmittelbar stromabwärts des Partikelfilters 24 dargestellt. In der zweiten Kurve II ist die Temperatur T2 am ersten Drei-Wege-Katalysator 26 bei aktiviertem Abgasbrenner 34 dargestellt. Die Temperatur T2 wird dazu an der Bauteilmitte des ersten Drei-Wege-Katalysators 26 ermittelt. Dabei wird der Verbrennungsmotor 10 an einem Startzeitpunkt S gestartet und gleichzeitig der Abgasbrenner 34 gestartet. In einer ersten Phase <100> werden der Partikelfilter 24 und der erste Drei-Wege-Katalysator 26 vom Abgas des Verbrennungsmotors 10 durchströmt und durch das Abgas aufgeheizt. Parallel wird der erste Drei-Wege-Katalysator 26 durch das heiße Abgas des Abgasbrenners 34 aufgeheizt, wobei die Wärme von dem Abgasbrenner 34 im Wesentlichen konvektiv auf den ersten Drei-Wege-Katalysator 26 übertragen wird. Hat der erste Drei-Wege-Katalysator 26 seine Light-Off-Temperatur T_{LO} erreicht, erfolgt in einer zweiten Phase <110> ein kombiniertes Beheizen des ersten Drei-Wege-Katalysators 26 aus einem Beheizen über den Abgasbrenner 34 und einem chemischen Beheizen, da ab diesem Zeitpunkt die unverbrannten Abgaskomponenten exotherm an der katalytisch wirksamen Oberfläche des ersten Drei-Wege-Katalysators 26 umgesetzt werden können. Hat der erste Drei-Wege-Katalysator 26 seine Betriebstemperatur erreicht, so wird der Abgasbrenner 34 abgeschaltet. In einer dritten Phase <120> ist der Abgasbrenner 34 abgeschaltet und die Temperatur des ersten Drei-Wege-Katalysators 26 wird durch die exothermen Reaktionen der unverbrannten Kraftstoffkomponenten an der katalytisch wirksamen Oberfläche des ersten Drei-Wege-Katalysators 26 gehalten. In einer vierten Betriebsphase <130> haben dann sowohl der erste Drei-Wege-Katalysator 26 als auch der Partikelfilter 24 eine Temperatur erreicht, bei der keine weiteren Heizmaßnahmen mehr notwendig sind. In der dritten Kurve ist zum Vergleich die Temperatur T3 des ersten Drei-Wege-Katalysators 26 dargestellt, wenn der Abgasbrenner 34 in keiner der Phasen <100>, <110> und <120> aktiviert ist.

Alternativ kann der Abgasbrenner 34 auch schon in einer Vorstartphase <90> aktiviert werden, sodass der erste Katalysator 26 bereits zum Start S des Verbrennungsmotors 10 seine Light-Off-Temperatur T_{LO} erreicht hat oder die Heizphase nochmals verkürzt werden kann.

Zusammenfassend lässt sich festhalten, dass durch ein erfindungsgemäßes Abgasnachbehandlungssystem und das beschriebene erfindungsgemäße Verfahren in allen Fahrzyklen das Erreichen einer Regenerationstemperatur des Partikelfilters sichergestellt werden kann und das Alterungsverhalten des Abgasnachbehandlungssystems verringert wird.

### Bezugszeichenliste

- 10: Verbrennungsmotor
- 12: Auslass
- 14: Brennraum
- 16: Zündkerze
- 18: Zylinderkopf

- 20: Abgasanlage
- 22: Abgaskanal
- 24: Partikelfilter
- 26: erster Drei-Wege-Katalysator
- 28: zweiter Drei-Wege-Katalysator

- 30: Abgasturbolader
- 32: Turbine
- 34: Abgasbrenner
- 36: Steuergerät
- 38: Einleitstelle

- 40: Sekundärluftsystem
- 42: Einleitstelle
- 44: Sekundärluftleitung
- 46: Sekundärluftpumpe
- 48: Sekundärluftventil

- 50: erste Lambdasonde / Breitbandsonde
- 52: zweite Lambdasonde / Sprungsonde
- 54: dritte Lambdasonde
- 56: erster Drucksensor
- 58: zweiter Drucksensor
- 60: Signalleitung
- 62: Signalleitung
- 64: Sekundärluftleitung
- 66: Sekundärluftventil

- <90>: Vorstartphase
- <100>: Startphase des Verbrennungsmotors
- <110>: zweite Phase
- <120>: dritte Phase
- <130>: vierte Phase

- S: Start des Verbrennungsmotors
- T: Temperatur
- T1: Temperatur
- T2: Temperatur am ersten Drei-Wege-Katalysator bei aktivem Abgasbrenner
- T3: Temperatur am ersten Drei-Wege-Katalysator bei deaktiviertem Abgasbrenner

- T_{LO}: Light-Off-Temperatur des elektrisch beheizbaren Katalysators
- T_{REG}: Regenerationstemperatur des Partikelfilters

## Patentansprüche

1. Abgasnachbehandlungssystem für einen Verbrennungsmotor (10), mit einer Abgasanlage (20), welche mit einem Auslass (12) des Verbrennungsmotors (10) verbindbar ist, wobei die Abgasanlage (20) einen Abgaskanal (22) umfasst, in dem in Strömungsrichtung eines Abgases des Verbrennungsmotors (10) durch den Abgaskanal (22) als erste emissionsmindernde Komponente motornah ein Partikelfilter (24), stromabwärts des Partikelfilters (24) ebenfalls in einer motornahen Position ein erster Drei-Wege-Katalysator (26) und stromabwärts des ersten Drei-Wege-Katalysators (26) ein weiterer Drei-Wege-Katalysator (28) angeordnet sind, wobei stromabwärts des Partikelfilters (24) ein Abgasbrenner (34) vorgesehen ist, mit welchem heißes Abgas zur Erwärmung zumindest eines der Drei-Wege-Katalysatoren (26, 28) in die Abgasanlage (20) einleitbar ist.

2. Abgasnachbehandlungssystem nach Anspruch 1, **dadurch gekennzeichnet, dass** der Partikelfilter (24) frei von einer Beschichtung und/oder frei von einem Sauerstoffspeicher ausgeführt ist.

3. Abgasnachbehandlungssystem nach Anspruch 1 oder 2, **dadurch gekennzeichnet, dass** der Abgasbrenner (34) mit einem variablen Verbrennungsluftverhältnis (λ_{B}) betreibbar ist.

4. Abgasnachbehandlungssystem nach Anspruch 3, **dadurch gekennzeichnet, dass** stromabwärts einer Einleitstelle (38) des Abgasbrenners (34) ein stöchiometrisches Abgas (λ=1) eingeregelt wird.

5. Abgasnachbehandlungssystem nach einem der Ansprüche 1 bis 4, **dadurch gekennzeichnet, dass** der Verbrennungsmotor (10) ein Sekundärluftsystem (40) zur Einbringung von Sekundärluft in den Abgaskanal (22) aufweist, wobei eine Einleitstelle (42) des Sekundärluftsystems (40) an dem Auslass (12) des Verbrennungsmotors (10) oder stromabwärts des Auslasses (12) und stromaufwärts des Partikelfilters (24) angeordnet ist.

6. Abgasnachbehandlungssystem nach einem der Ansprüche 1 bis 5, **dadurch gekennzeichnet, dass** eine Einleitstelle (38) der Abgase des Abgasbrenners (34) stromabwärts des Partikelfilters (24) und stromaufwärts des ersten Drei-Wege-Katalysators (26) ausgebildet ist.

7. Abgasnachbehandlungssystem nach einem der Ansprüche 1 bis 6, **dadurch gekennzeichnet, dass** stromaufwärts des Partikelfilters (24) eine erste Lambdasonde (50) und stromabwärts des ersten Drei-Wege-Katalysators (26) und stromaufwärts des zweiten Drei-Wege-Katalysators (28) eine zweite Lambdasonde (52) im Abgaskanal (22) angeordnet sind.

8. Abgasnachbehandlungssystem nach einem der Ansprüche 1 bis 7, **dadurch gekennzeichnet, dass** stromaufwärts des Partikelfilters (24) ein erster Drucksensor (56) und stromabwärts des Partikelfilters (24) ein zweiter Drucksensor (58) angeordnet sind.

9. Verfahren zur Abgasnachbehandlung eines Verbrennungsmotors (10) mit einem Abgasnachbehandlungssystem nach einem der Ansprüche 1 bis 8, umfassend folgende Schritte:
- Aufheizen zumindest eines der Drei-Wege-Katalysatoren (26, 28) auf eine Light-Off-Temperatur (T_{LO}) durch Einleiten von heißen Abgasen des Abgasbrenners (34) in die Abgasanlage (20),
- Beheizen des Partikelfilters (24), des ersten Drei-Wege-Katalysators (26) und des zweiten Drei-Wege-Katalysators (28) mit dem Abgasstrom des Verbrennungsmotors (10) ab dem Start des Verbrennungsmotors (10).

10. Verfahren zur Abgasnachbehandlung nach Anspruch 9, **dadurch gekennzeichnet, dass** in einer Heizphase eines der Drei-Wege-Katalysatoren (26, 28) oder des Partikelfilters (24) Sekundärluft in den auslassseitigen Zylinderkopf (18) oder in den Abgaskanal (22) stromabwärts des Auslasses (12) und stromaufwärts des Partikelfilter (24) eingebracht wird, um das Aufheizen der Katalysatoren (26, 28) oder des Partikelfilters (24) durch eine exotherme Umsetzung von unverbrannten Kraftstoffkomponenten zu unterstützen.

## Claims

1. Exhaust gas purification system for an internal combustion engine (10), having an exhaust system (20) which is connectable to an outlet (12) of the internal combustion engine (10), wherein the exhaust system (20) comprises an exhaust gas channel (22) in which, in the flow direction of an exhaust of the internal combustion engine (10) through the exhaust gas channel (22), a particle filter (24) is arranged proximal to the engine as a first emission-reducing component; a first three-way catalytic converter (26) is arranged downstream of the particle filter (24), likewise in a position proximal to the engine; and a further three-way catalytic converter (28) is arranged downstream of the first three-way catalytic converter (26); wherein an exhaust gas burner (34) is arranged downstream of the particle filter (24), with which burner (34) hot exhaust can be introduced into the exhaust system (20) to heat at least one of the three-way catalytic converters (26, 28).

2. Exhaust gas purification system according to claim 1, **characterized in that** the particle filter (24) is free of a coating and/or free of an oxygen storage.

3. Exhaust gas purification system according to claim 1 or 2, **characterized in that** the exhaust gas burner (34) can be operated with a variable air-fuel ratio (λB).

4. Exhaust gas purification system according to claim 3, **characterized in that** a stoichiometric exhaust gas (λ=1) is adjusted downstream of an introduction point (38) of the exhaust gas burner (34).

5. Exhaust gas purification system according to any of claims 1 to 4, **characterized in that** the internal combustion engine (10) comprises a secondary air system (40) for introducing secondary air into the exhaust gas channel (22), wherein an introduction point (42) of the secondary air system (40) is arranged at the outlet (12) of the internal combustion engine (10), or downstream of the outlet (12) and upstream of the particulate filter (24).

6. Exhaust gas purification system according to any of claims 1 to 5, **characterized in that** an introduction point (38) of the exhaust gases of the exhaust gas burner (34) is formed downstream of the particle filter (24) and upstream of the first three-way catalytic converter (26).

7. Exhaust gas purification system according to any of claims 1 to 6, **characterized in that** a first lambda sensor (50) is arranged in the exhaust gas channel (22) upstream of the particulate filter (24), and a second lambda sensor (52) is arranged in the exhaust gas channel (22) downstream of the first three-way catalytic converter (26) and upstream of the second three-way catalytic converter (28).

8. Exhaust gas purification system according to any of claims 1 to 7, **characterized in that** a first pressure sensor (56) is arranged upstream of the particle filter (24) and a second pressure sensor (58) is arranged downstream of the particle filter (24).

9. Method for purifying exhaust gas of an internal combustion engine (10) having an exhaust gas purification system according to any of claims 1 to 8, including the following steps:
- heating at least one of the three-way catalytic converters (26, 28) to a light-off temperature (T_{LO}) by introducing hot exhaust gases of the exhaust gas burner (34) into the exhaust system (20),
- heating the particulate filter (24), the first three-way catalytic converter (26), and the second three-way catalytic converter (28) with the exhaust gas stream of the internal combustion engine (10) as of the starting of the internal combustion engine (10).

10. Method for purifying exhaust gas according to claim 9, **characterized in that**, in a heating phase of one of the three-way catalytic converters (26, 28) or of the particulate filter (24), secondary air is introduced into the outlet-side cylinder head (18) or into the exhaust gas channel (22) downstream of the outlet (12) and upstream of the particulate filter (24) in order to assist the heating of the catalytic converters (26, 28) or of the particulate filter (24) by means of an exothermic reaction of unburned fuel components.

## Revendications

1. Système de post-traitement de gaz d'échappement pour un moteur à combustion interne (10), comprenant un système d'échappement (20), lequel peut être raccordé à une sortie (12) du moteur à combustion interne (10), le système d'échappement (20) comprenant un canal de gaz d'échappement (22), dans lequel, dans la direction d'écoulement d'un gaz d'échappement du moteur à combustion interne (10) à travers le canal de gaz d'échappement (22), sous forme de premier composant réduisant les émissions, dans une position proche du moteur, est disposé un filtre à particules (24), en aval du filtre à particules (24), également dans une position proche du moteur, est disposé un premier catalyseur à trois voies (26) et, en aval du premier catalyseur à trois voies (26), est disposé un autre catalyseur à trois voies (28), un brûleur de gaz d'échappement (34) étant prévu en aval du filtre à particules (24), par lequel du gaz d'échappement chaud peut être introduit dans le système d'échappement (20) pour chauffer au moins un des catalyseurs à trois voies (26, 28).

2. Système de post-traitement de gaz d'échappement selon la revendication 1, **caractérisé en ce que** le filtre à particules (24) est réalisé dépourvu d'un revêtement et/ou dépourvu d'un accumulateur d'oxygène.

3. Système de post-traitement de gaz d'échappement selon la revendication 1 ou 2, **caractérisé en ce que** le brûleur de gaz d'échappement (34) peut être exploité avec un taux d'air de combustion (λ_{B}) variable.

4. Système de post-traitement de gaz d'échappement selon la revendication 3, **caractérisé en ce qu'un** gaz d'échappement stœchiométrique (λ=1) est réglé en aval d'une entrée (38) du brûleur de gaz d'échappement (34).

5. Système de post-traitement de gaz d'échappement selon l'une quelconque des revendications 1 à 4, **caractérisé en ce que** le moteur à combustion interne (10) présente un système d'air secondaire (40) pour l'introduction d'air secondaire dans le canal de gaz d'échappement (22), une entrée (42) du système d'air secondaire (40) étant disposée à la sortie (12) du moteur à combustion interne (10) ou en aval de la sortie (12) et en amont du filtre à particules (24).

6. Système de post-traitement de gaz d'échappement selon l'une quelconque des revendications 1 à 5, **caractérisé en ce qu'**une entrée (38) des gaz d'échappement du brûleur de gaz d'échappement (34) est conçue en aval du filtre à particules (24) et en amont du premier catalyseur à trois voies (26).

7. Système de post-traitement de gaz d'échappement selon l'une quelconque des revendications 1 à 6, **caractérisé en ce qu'**une première sonde lambda (50) est disposée en amont du filtre à particules (24) et une deuxième sonde lambda (52) est disposée en aval du premier catalyseur à trois voies (26) et en amont du deuxième catalyseur à trois voies (28) dans le canal de gaz d'échappement (22).

8. Système de post-traitement de gaz d'échappement selon l'une quelconque des revendications 1 à 7, **caractérisé en ce qu'**un premier capteur de pression (56) est disposé en amont du filtre à particules (24) et un deuxième capteur de pression (58) est disposé en aval du filtre à particules(24).

9. Procédé de post-traitement de gaz d'échappement d'un moteur à combustion interne (10) comprenant un système de post-traitement de gaz d'échappement selon l'une quelconque des revendications 1 à 8, comprenant les étapes suivantes :
- chauffage d'au moins un des catalyseurs à trois voies (26, 28) à une température d'amorçage (T_{LO}) par introduction de gaz d'échappement chauds du brûleur de gaz d'échappement (34) dans le système d'échappement (20),
- chauffage du filtre à particules (24), du premier catalyseur à trois voies (26) et du deuxième catalyseur à trois voies (28) avec le flux de gaz d'échappement du moteur à combustion interne (10) à partir du démarrage du moteur à combustion interne (10).

10. Procédé de post-traitement de gaz d'échappement selon la revendication 9, **caractérisé en ce que,** lors d'une phase de chauffage d'un des catalyseurs à trois voies (26, 28) ou du filtre à particules (24), de l'air secondaire est introduit dans la tête de cylindre (18) côté sortie ou dans le canal de gaz d'échappement (22) en aval de la sortie (12) et en amont du filtre à particules (24), pour supporter le chauffage des catalyseurs (26, 28) ou du filtre à particules (24) au moyen d'une réaction exothermique de composants de carburant non brûlés.
